# EUROPEAN PATENT APPLICATION

(11) **EP 2 214 428 A1**
(43) Date of publication of application: **04.08.2010**
(21) Application number: 08861701.4
(22) Date of filing: 05.12.2008
(51) Int. Cl.: H04W 4/12

(54) **METHOD, SYSTEM AND DEVICE FOR REMOTE CONTROL TERMINAL**

(30) Priority: 07.12.2007 CN 200710194970
(71) Applicant: Huawei Device Co., Ltd., Longgang District Shenzhen Guangdong 518129 (CN)
(72) Inventor: WANG, Rui, Shenzhen Guangdong 518129 (CN); LUO, Yaoping, Shenzhen Guangdong 518129 (CN); TIAN, Linyi, Shenzhen Guangdong 518129 (CN); CHAI, Xiaoqian, Shenzhen Guangdong 518129 (CN); LI, Kepeng, Shenzhen Guangdong 518129 (CN)
(74) Representative: Körber, Martin Hans
(86) International application number: PCT/CN2008/073360
(87) International publication number: WO 2009/076866

(57) **Abstract**

A method for controlling a terminal remotely is disclosed herein. The method is applied in a DM system, and includes: receiving a remote control instruction sent by a DM server, where the remote control instruction carries AT instruction information; obtaining an AT instruction according to the AT instruction information; and executing the AT instruction. Through the technical solution under the present invention, the DM server delivers the remote control instruction that carries AT instruction information to the terminal, and the terminal obtains an AT instruction according to the AT instruction information, and executes the operation indicated by the AT instruction, thus controlling the terminal remotely. Because the probability of altering the AT instruction in the DM system is low, the remote control is securer, and the user experience is improved.

## Description

This application claims priority to Chinese Patent Application No. 200710194970.X, filed with the Chinese Patent Office on December 07, 2007 and entitled "Method, System, and Apparatus for Controlling Terminal Remotely", which is hereby incorporated by reference in its entirety.

### FIELD OF THE INVENTION

The present invention relates to mobile communication technologies, and in particular, to a method, a system, and an apparatus for controlling a terminal remotely.

### BACKGROUND

Mobile phones are generalized now, and have become an information system and a communication device that accompany the user. However, when a user brings no mobile phone, the user almost loses contact with others. In this case, the user is urgent to get the address book information on the mobile phone, or know whether anybody has made a call or sent a short message to the user.

Currently, juveniles use mobile phones at earlier ages, and parents expect to know use of the mobile phones by their children, and check whether they have received or sent unhealthy short messages or dialed the telephone number of the adult information service. Some elders also use mobile phones but are not familiar with use of mobile phones. When an elder brings a mobile phone but goes astray, the relevant person needs to enable the Global Position System (GPS) function of the elder's mobile phone, or instruct the elder's mobile phone to take a photo and send it to the destination terminal through Multimedia Short Message (MSM), so as to know the current location of the elder. The foregoing scenarios require the same or similar function, namely, controlling a terminal remotely so that the terminal can execute specific instructions, or obtaining certain information in the terminal.

A method for managing a mobile terminal remotely in the prior art is: A mobile terminal sender sends a short message of a specific format to a mobile terminal receiver; after receiving the short message, the mobile terminal receiver checks the short message, and executes the commands carried in the short message after the check succeeds. However, the remote control exercised through a short message is vulnerable to alteration of the short message in the transmission process and thus insecure, and it is difficult for the receiver to judge the control authority of the sender.

In the process of developing the present invention, the inventor finds at least these problems in the prior art: The remote control exercised through short messages is not secure, it is difficult for the receiver to judge the control right of the sender, and user experience is not good.

### SUMMARY

A method, a system, and an apparatus for controlling a terminal remotely are provided in embodiments of the present invention. Therefore, the terminal can be controlled remotely through an AT instruction in a Device Management (DM) system, which provides high security of remote control and better user experience.

A method for controlling a terminal remotely is provided in an embodiment of the present invention. The method is applied in a DM system, and includes:
receiving a remote control instruction sent by a DM server, where the remote control instruction carries AT instruction information;
obtaining an AT instruction according to the AT instruction information; and executing the AT instruction.

A system for controlling a terminal remotely is provided in an embodiment of the present invention. The system includes:
a DM server, adapted to send a remote control instruction that carries AT instruction information; and
a terminal, adapted to: receive the remote control instruction sent by the DM server, obtain an AT instruction according to AT instruction information in the remote control instruction, and execute the AT instruction; and store the result of executing the AT instruction and/or a result code of the execution result so that they are readable by the DM server.

A terminal provided in an embodiment of the present invention includes:
an instruction receiving module, adapted to receive a remote control instruction sent by a DM server, where the remote control instruction carries AT instruction information;
an instruction obtaining module, adapted to obtain an AT instruction according to the AT instruction information received by the instruction receiving module; and
an instruction executing module, adapted to execute the AT instruction obtained by the instruction obtaining module.

A DM server provided in an embodiment of the present invention includes:
an instruction sending module, adapted to send a remote control instruction that carries AT instruction information to a terminal, where: the terminal is adapted to receive the remote control instruction, obtain an AT instruction according to the AT instruction information in the remote control instruction, and execute the AT instruction.

Compared with the prior art, the technical solution under the present invention brings these benefits: The DM server sends a remote control instruction that carries an AT instruction, controls the terminal to execute operations, and obtains the execution result of the terminal. In this way, the terminal is controlled remotely with securer remote control and better user experience.

### BRIEF DESCRIPTION OF THE DRAWINGS

To make the technical solution in the present invention or in the prior art clearer, the following outlines the accompanying drawings for illustrating the embodiments of the present invention or the prior art. Apparently, the accompanying drawings outlined below are for the exemplary purpose only, and persons of ordinary skilled in the art can derive other drawings from such accompanying drawings without creative effort.
FIG. 1 shows an overall structure of an OMA DM in the prior art;
FIG. 2 is a flowchart of a method for controlling a terminal remotely in an embodiment of the present invention;
FIG. 3 shows a remote control management tree in an embodiment of the present invention;
FIG. 4 shows an improved terminal management tree in an embodiment of the present invention; and
FIG. 5 shows a structure of a system for controlling a terminal remotely in an embodiment of the present invention.

### DETAILED DESCRIPTION OF THE EMBODIMENTS

The following detailed description is directed to the technical solution of the present invention with reference to the accompanying drawings. However, the embodiments to be described are only a part of, rather than all of, the embodiments of the present invention. Additionally, all other embodiments, which can be derived by those skilled in the art from the embodiments given herein without any creative effort, fall within the scope of the present invention.

Open Mobile Alliance (OMA) DM V1.2 (hereinafter referred to as "DM Standard") is a unified DM specification developed by the OMA. It defines the functions of remote management on a destination terminal. The DM system provides a cost-efficient solution, through which a third party can manage and set the environment and configuration information in a wireless network terminal equipment (TE) (such as mobile terminals and functional objects in the terminals), and solve the problems encountered in the process of using such network devices. In this solution, software and firmware are installed and upgraded in an Over The Air (OTA) mode, and therefore, more personalized and individualized services are provided, and user experience is improved. The third party may be a mobile operator, service provider, or an information management department of a partner.

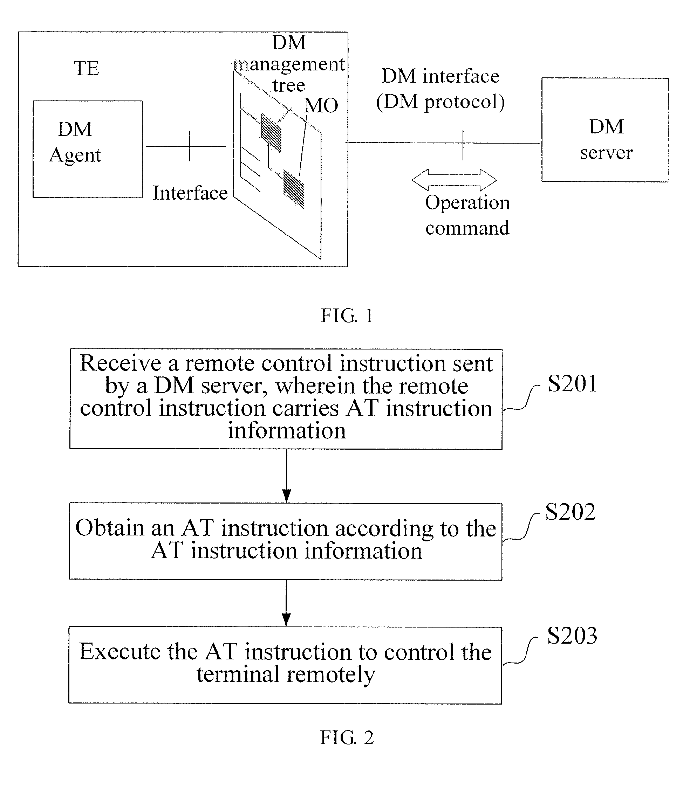

The overall structure of the OMA DM is shown in FIG. 1. The DM agent on the TE is adapted to interpret and execute the management command delivered by the DM server. The management tree stored on the TE may be regarded as an interface through which the DM server manages the TE based on the DM protocol. The overall structure includes some basic management objects (MOs). The DM server operates the MOs in the management tree to control the MOs of the terminal. Operation commands include Get, Replace, Exec, Copy, and Delete.

Based on the OMA DM functions, a method may be developed to control the terminal remotely. The functions of the terminal may be implemented through an AT instruction. An AT instruction is also known as a Hayes instruction. It was initially put forward by Hayes Company as a standard language of communication between the computer and the modem, and was primarily used for controlling the dialing and answering of the modem. In early 1990s, because no precedent of controlling mobile phone text messages exists, an SMS Block Mode protocol was developed, and the SMS was completely controlled through a TE or computer. A few years later, main mobile phone manufacturers such as Nokia, Ericsson, Motorola, and HP worked jointly to develop a whole set of AT instructions for the Global System For Mobile Communications (GSM). The AT instructions include control on the SMS. On that basis, the AT instruction evolved and was added into the GSM 07.05 standard and the GSM 07.07 standard developed by the European Telecommunications Standards Institute (ETSI). Apart from the standard instruction set specified by the ETSI, the main mobile phone manufacturers have some extended AT instructions, for example, "AT^SMSO", which is a power-off command specific to the mobile module of Siemens, and "AT^SSYNC", which is a command for setting state indicators. The GSM modules can be easily controlled through a serial port on the computer by means of software such as serial port debug helper. Given below are examples of the AT instruction:
ATDL: Redial last telephone number used; and
ATH: Disconnect existing connection.

A method for controlling a terminal remotely is provided in an embodiment of the present invention. Through this method, the DM server instructs the terminal to perform operations by delivering an AT instruction, thus controlling the terminal remotely. Because the DM system is highly reliable, the probability of altering the AT instruction in the DM system is low, the remote control is securer, and the user experience is improved.

FIG. 2 is a flowchart of a method for controlling a terminal remotely in an embodiment of the present invention. The method includes the following steps:
Step S201: Receive a remote control instruction sent by a DM server, where the remote control instruction carries AT instruction information. The communication between the application server and the terminal is performed through DM communication between the terminal and the DM server. When the application server wants to control the terminal to execute certain operations, the application server delivers the remote control instruction that needs to be executed by the terminal to the terminal through a DM server. The remote control instruction includes AT instruction information. The AT instruction information may include the command name, command parameters, and user information of the AT instruction. The command parameters and the user information of the AT instruction are not mandatory to every AT instruction, but are provided only when necessary.
Step S202: Obtain an AT instruction according to the AT instruction information.

After receiving the AT instruction information, the terminal combines the command name of the AT instruction, and/or command parameters, and/or user information in the AT instruction information into an AT instruction.

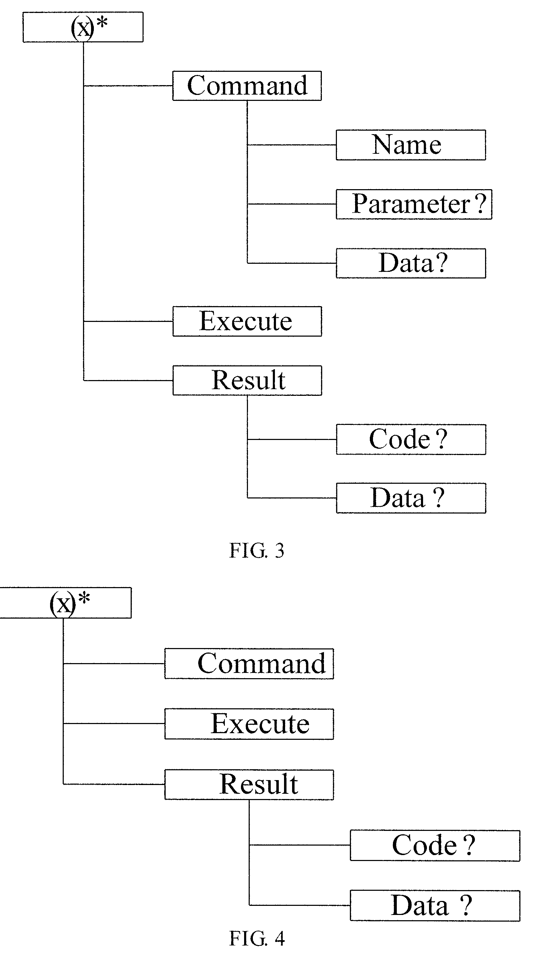

An AT instruction can perform many operations. In an embodiment of the present invention, the DM server instructs the terminal to perform a certain operation by delivering an AT instruction. FIG. 3 shows a remote control management tree, and illustrates how a DM server delivers AT instruction information to a terminal.

Three level-2 nodes exist in this management tree. The Command node records the operation instructions delivered by the DM server; the Execute node is executable, and the terminal executes the operation instruction recorded in the Command node when the DM server sends a command of executing the Execute node; and the Result node records the result of the execution.

The operation instruction delivered by the DM server is an AT instruction. Under the Command node, the AT instruction is split into three parts: instruction name, instruction parameters, and instruction object/contents. The instruction name refers to actions indicated by the instruction, instruction parameters refer to the parameters of the instruction, and instruction objects/contents are auxiliary information of the instruction. The instruction parameters and the instruction objects/contents are not mandatory to every AT instruction, but are provided only when necessary. Two parts exist under the Result node: "Code" refers to a result of executing the instruction, for example, success or failure; and "Data" stores information obtained after the instruction is executed.

When the DM server sends a command of executing the Execute node, the terminal executes the operation command recorded in the Command node.

Step S203: Execute the AT instruction to control the terminal remotely. The terminal records the AT instruction information into a remote control management object (RCMO) of the terminal. A remote control (RC) agent in the terminal obtains the AT instruction information, makes up an AT instruction, and executes the AT instruction, thus implementing remote control on the terminal. The RCMO stores the AT instruction information delivered by the DM server, and then the RC agent reads the instruction information. After executing the AT instruction, the RC agent records the execution result into the Result node. The terminal obtains an execution result through the RCMO, and reports the execution result to the DM server. What is reported may be only a result code. After receiving the result code, the DM server obtains the content in the Data as required, or the terminal sends both the result code and the Data to the DM server.

The nodes in the remote control management tree in FIG. 3 are described below:
Command:

| State | Tree Occurrence | Form | Minimum access |
|---|---|---|---|
| REQUIRED | One | Node | Get |

Given above is a placeholder of the AT instruction. Its subnodes describe information about an AT instruction. "Tree Occurrence" denotes how many times the "placeholder of AT instruction" event occurs, and "One" means that the placeholder of the AT instruction must occur once.
Command/Name:

| State | Tree Occurrence | Form | Minimum access |
|---|---|---|---|
| REQUIRED | One | Chr | Get |

Given above is a name of the AT instruction. It does not include the "AT" characters, for example, "+CMGS". "Tree Occurrence" denotes how many times the "AT instruction name" event occurs, and "One" means that the name of the AT instruction must occur once.
Command/Parameter:

| State | Tree Occurrence | Form | Minimum |
|---|---|---|---|
| REQUIRE | ZeroOrOne | Chr | Get |

Given above is a parameter of the AT instruction. It does not include the last carriage return character in the AT instruction, for example, "+8613501112222". "Tree Occurrence" denotes how many times the "parameter of AT instruction" event occurs, and "ZeroOrOne" means that the parameter of the AT instruction may occur or not.
Command/Data:

| State | Tree Occurrence | Form | Minimum |
|---|---|---|---|
| REQUIRE D | ZeroOrOne | bin | Get |

Given above is auxiliary information of the AT instruction. It exists only in certain instructions, for example, content of a short message in the process of sending the short message. "Tree Occurrence" denotes how many times the "auxiliary information of AT instruction" event occurs, and "ZeroOrOne" means that the auxiliary information of the AT instruction may occur or not.
Execute:

| State | Tree Occurrence | Form | Minimum |
|---|---|---|---|
| REQUIRE | One | Null | Exec |

Given above is an Execute node ot the AT instruction. Execution of such a node triggers the terminal to execute the AT instruction described under the Command node. "Tree Occurrence" denotes how many times the "Execute node of AT instruction" occurs, and "One" means that the Execute node of the AT instruction must occur once.
Result:

| State | Tree | Form | Minimum |
|---|---|---|---|
| REQUIRED | One | Node | Get |

Given above is a placeholder of the execution result of the AT instruction. Its subnodes describe a result of executing the AT instruction. "Tree Occurrence" denotes how many times the "placeholder of execution result of AT instruction" occurs, and "One" means that the placeholder of the execution result of the AT instruction must occur once.
Result/Code:

| State | Tree | Form | Minimum |
|---|---|---|---|
| REQUIRED | ZeroOrOne | Int | Get |

Given above is an identification code of the execution result of the AT instruction. It denotes the execution result of the AT instruction. For example, "200" represents success. "Tree Occurrence" denotes how many times the "identification code of execution result of AT instruction" event occurs, and "ZeroOrOne" means that the identification code of the execution result of the AT instruction may occur or not.
Result/Data:

| State | Tree Occurrence | For | Minimum |
|---|---|---|---|
| REQUIRED | ZeroOrOne | bin | Get |

Given above is detailed content of the execution result of the AT instruction. Some information such as "Read the content of the short message" may be returned after the AT instruction is executed. "Tree Occurrence" denotes how many times the "detailed content of execution result of AT instruction" event occurs, and "ZeroOrOne" means that the detailed content of the execution result of the AT instruction may occur or not.

Through the foregoing method for controlling the terminal remotely, the DM server delivers the remote control instruction that carries AT instruction information to the terminal, and the terminal obtains an AT instruction according to the AT instruction information, and executes the operation indicated by the AT instruction, thus controlling the terminal remotely. Because the probability of altering the AT instruction in the DM system is low, the remote control is securer, and the user experience is improved.

The first embodiment of the method for controlling a terminal remotely in the present invention provides a method for powering off a terminal remotely.

The application server needs to power off a remote terminal, and generates the following codes which are sent by the DM server to the terminal:

```
   <Replace>
      <CmdID>3</CmdID>
      <Item>
        <Target><LocURI>./RCMO/Command/Name</LocURI></Target>
             <Meta>
               <Format xmlns='syncml:metinf'>chr</Format>
               <Type xmlns='syncml:metinf'>text/plain</Type>
             </Meta>
             <Data>+CPOF</Data>
        </Item>
   </Replace>
   <Exec>
       <CmdID>4</CmdID>
       <Item><Target><LocURI>./RCMOBxecute</LocURI></Target></Item>
   </Exec>
```

In the information carried in the foregoing codes, the Command node records the AT instruction information delivered by the server; "Command/Name" records the name of the AT instruction, namely, "+CPOF". The AT instruction is sent to the RCMO of the terminal.

After receiving the instruction, the terminal records the "+CPOF" into the command name, and answers the DM command. Afterward, according to the AT instruction information, the terminal makes up an AT instruction "AT+CPOF", and transmits it to the RC agent. The RC agent executes the AT instruction. The terminal is powered off, and no result is recorded.

The second embodiment of the method for controlling a terminal remotely in the present invention provides a method for sending a short message remotely.

First, the terminal management tree is improved: The subnode of the Command node is cancelled, and all AT instructions are stored in the Command node, as shown in FIG. 4. The Command node is modified in the following way:
Command:

| State | Tree Occurrence | For | Minimum |
|---|---|---|---|
| REQUIRED | One | Bin | Get |

Given above is the full text of an AT instruction. It describes information about the AT instruction. "Tree Occurrence" denotes how many times the "full text of AT instruction" event occurs, and "One" means the full text of the AT instruction must occur once.

The meanings of the content of other nodes remain unchanged.

For example, when the application server wants to instruct the terminal to send a short message "Happy Birthday" to "+8613501112222", the application server sends the following instruction to the terminal through a DM server, and the terminal stores the instruction under the RCMO/Command node:
AT+CMGS = "+8613501112222" (carriage return character)
Happy Birthday(Crtl+Z).

The RC agent executes the AT instruction. After the execution succeeds, the terminal sends the short message, and the RC agent records "200" in RCMO/Result/Code, indicating that the short message is sent successfully. Through Generic Alert, the terminal returns the operation result to the DM server.

The third embodiment of the method for controlling a terminal remotely in the present invention provides a method for reading the first three entries in the address book of a terminal.

When an application server instructs the terminal to return the first three entries in the address book of the terminal, the application server modifies the value of each node in the RCMO. The modified node values are as follows:

| | |
|---|---|
| RCMO/Command/Name | +CPBR |
| RCMO/Command/Parameter | 1, 3 |

| | |
|---|---|
| RC agent executes the AT instruction: AT+CPBR=1, 3 (carriage return character). | |

After the instruction is executed successfully, the RC agent returns 1-3 entries of the address book, and records "200" in the RCMO/Result/Code, indicating that the entries are read successfully. The RC agent stores the entries of the address book into RCMO/Result/Data. An entry of the address book includes: AT instruction name + entry X + telephone number + telephone number type + name. The address book entries are detailed below:
+CPBR: 1," 7751112222",145,"Alan";
+CPBR: 2,"13501113333",129,"Bob"; and
+CPBR: 3,"13501114444",129,"Chris".

Through Generic Alert, the terminal returns the operation result to the DM server. The operation result may also include the content of the address book entries. If the terminal does not provide the address book entries in the reported information, the application server may use a Get RCMO/Result/Data instruction to obtain the three found entries of the address book after knowing success of the operation.

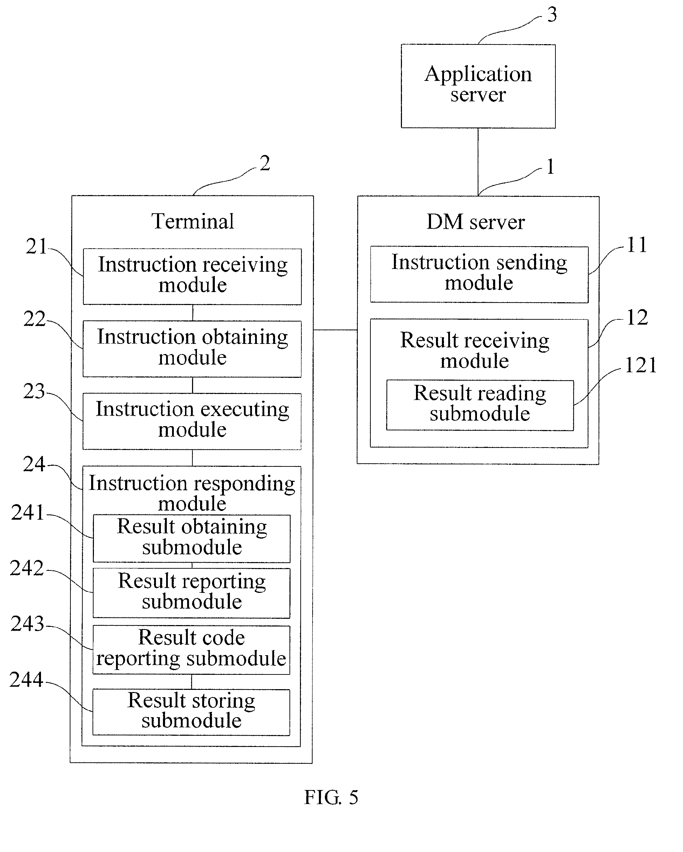

FIG. 5 shows a structure of a system for controlling a terminal remotely in an embodiment of the present invention. The system includes:
a DM server 1, adapted to send a remote control instruction that carries AT instruction information; and
a terminal 2, adapted to: receive the remote control instruction sent by the DM server 1, obtain an AT instruction according to AT instruction information in the remote control instruction, and execute the AT instruction; and store the result of executing the AT instruction and/or a result code of the execution result so that they are readable by the DM server 1.

The system for controlling a terminal remotely further includes an application server 3, adapted to:
deliver to the DM server 1 an operation command to be executed by the terminal 2, whereupon the DM server 1 sends a remote control command that carries AT instruction information to the terminal 2 according to the operation command; and
obtain the execution result of the terminal 2 through the DM server 1.

The terminal 2 may include:
an instruction receiving module 21, adapted to receive a remote control instruction sent by a DM server 1, where the remote control instruction carries AT instruction information;
an instruction obtaining module 22, adapted to obtain an AT instruction according to the AT instruction information received by the instruction receiving module 21; and
an instruction executing module 23, adapted to execute the AT instruction obtained by the instruction obtaining module 22 so as to perform remote control on the terminal.

The terminal 2 may further include an instruction responding module 24, which is adapted to return the result of executing the AT instruction to the DM server 1 after the instruction executing module 23 executes the AT instruction.

The instruction responding module 24 includes:
a result obtaining submodule 241, adapted to obtain the result of executing the AT instruction; and
a result reporting submodule 242, adapted to report the execution result obtained by the result obtaining submodule 241 to the DM server 1.

The instruction responding module 24 further includes a result code reporting submodule 243, which is adapted to report the result code of the result of executing the AT instruction to the DM server 1.

The instruction responding module 24 further includes a result storing submodule 244, which is adapted to store the result of executing the AT instruction after the result code reporting submodule 243 reports the result code of the execution result to the DM server 1.

The DM server 1 includes an instruction sending module 11, which is adapted to send a remote control instruction that carries AT instruction information to the terminal 2.

The DM server 1 further includes a result receiving module 12, which is adapted to receive the execution result reported by the terminal 2.

The result receiving module 12 includes a result reading submodule 121, which is adapted to read data of the execution result according to the result code of the execution result if the execution result reported by the terminal 2 is a result code.

In an actual DM system, the terminal may include an RCMO and an RC agent. The RCMO is adapted to store the operation instruction delivered by the DM server, and trigger the RC agent to execute the operation instruction as instructed by the DM server. After receiving the execution instruction delivered by the DM server, the RCMO triggers the RC agent to execute the instruction delivered by the DM server. After executing the operation instruction delivered by the DM server, the RC agent returns the execution result to the RCMO for storing. The RCMO may return the result to the application server through the DM server, or wait for the application server to read the result.

Through the system for controlling the terminal remotely, the DM server 1 delivers the remote control instruction that carries AT instruction information to the terminal 2, and the terminal 2 obtains an AT instruction according to the AT instruction information, and executes the operation indicated by the AT instruction, thus controlling the terminal remotely. Because the probability of altering the AT instruction is low, the remote control is securer, and the user experience is enhanced.

After reading the foregoing embodiments, those skilled in the art are clearly aware that the present invention may be implemented through hardware, or through software in addition to a necessary universal hardware platform. Therefore, the technical solution under the present invention may be embodied as a software product. The software product may be stored in a non-volatile storage medium (such as CD-ROM, USB flash disk, or mobile hard disk), and may include several instructions that enable a computer device (such as personal computer, server, or network device) to perform the methods provided in the embodiments of the present invention.

The above descriptions are merely preferred embodiments of the present invention, but not intended to limit the scope of the present invention. Any modifications or variations that can be derived by those skilled in the art should fall within the scope of the present invention.

## Claims

1. A method for controlling a terminal remotely, wherein the method is applied in a Device Management (DM) system and comprises:
receiving a remote control instruction sent by a DM server, wherein the remote control instruction carries AT instruction information;
obtaining an AT instruction according to the AT instruction information; and
executing the AT instruction.

2. The method for controlling a terminal remotely according to claim 1, wherein after the AT instruction is executed, the method further comprises:
returning a result of executing the AT instruction to the DM server.

3. The method for controlling a terminal remotely according to claim 1, wherein:
the AT instruction information comprises: a command name of the AT instruction; or the command name and a command parameter of the AT instruction; or the command name and user information of the AT instruction; or the command name, the command parameter, and the user information of the AT instruction; and
the obtaining of the AT instruction according to the AT instruction information comprises:
combining the following into the AT instruction: a command name of the AT instruction; or the command name and the command parameter of the AT instruction; or the command name and
the user information of the AT instruction; or the command name, the command parameter, and
the user information of the AT instruction.

4. The method for controlling a terminal remotely according to claim 2, wherein: the returning of the result of executing the AT instruction to the DM server comprises:
obtaining the result of executing the AT instruction; and
reporting the execution result to the DM server.

5. The method for controlling a terminal remotely according to claim 4, wherein the reporting of the execution result to the DM server comprises:
reporting a result code of the result of executing the AT instruction to the DM server.

6. The method for controlling a terminal remotely according to claim 5, wherein after reporting the result code of the result of executing the AT instruction to the DM server, the method further comprises:
storing the result of executing the AT instruction and/or the result code of the execution result so that they are readable by the DM server.

7. A system for controlling a terminal remotely, comprising:
a Device Management (DM) server, adapted to send a remote control instruction that carries AT instruction information; and
a terminal, adapted to receive the remote control instruction sent by the DM server, obtain an AT instruction according to the AT instruction information in the remote control instruction, and execute the AT instruction.

8. The system of claim 7, wherein:
the terminal is further adapted to store a result of executing the AT instruction and/or a result code of the execution result; and
the DM server is further adapted to receive the execution result reported by the terminal, or read the execution result and/or the result code stored in the terminal.

9. A terminal, comprising:
an instruction receiving module, adapted to receive a remote control instruction sent by a Device Management (DM) server, wherein the remote control instruction carries AT instruction information;
an instruction obtaining module, adapted to obtain an AT instruction according to the AT instruction information received by the instruction receiving module; and
an instruction executing module, adapted to execute the AT instruction obtained by the instruction obtaining module so as to perform remote control on the terminal.

10. The terminal of claim 9, further comprising:
an instruction responding module, adapted to return an execution result to the DM server after the instruction executing module completes remote control on the terminal.

11. The terminal of claim 10, wherein the instruction responding module comprises:
a result obtaining submodule, adapted to obtain the execution result of the AT instruction;
and
a result reporting submodule, adapted to report the execution result obtained by the result obtaining submodule to the DM server.

12. The terminal of claim 10, wherein the instruction responding module comprises:
a result code reporting submodule, adapted to report a result code of the execution result of the AT instruction to the DM server.

13. The terminal of claim 12, wherein the instruction responding module further comprises:
a result storing submodule, adapted to store the execution result of the AT instruction after the result code reporting submodule reports the result code of the execution result to the DM server.

14. A Device Manager (DM) server, comprising:
an instruction sending module, adapted to send a remote control instruction that carries AT instruction information to a terminal, wherein the terminal is adapted to receive the remote control instruction, obtain an AT instruction according to the AT instruction information in the remote control instruction, and execute the AT instruction.

15. The DM server of claim 14, further comprising:
a result receiving module, adapted to receive an execution result reported by the terminal.

16. The DM server of claim 15, wherein the result receiving module comprises:
a result reading submodule, adapted to read data of the execution result according to a result code of the execution result if the execution result reported by the terminal is the result code.
